## Europäisches Patentamt
## European Patent Office
## Office européen des brevets

(11) Veröffentlichungsnummer: **0 090 260 B1**

(12) # EUROPÄISCHE PATENTSCHRIFT

(45) Veröffentlichungstag der Patentschrift:
02.10.85

(51) Int. Cl.⁴: **C 09 C 1/00,** C 09 C 3/06

(21) Anmeldenummer: 83102593.7

(22) Anmeldetag: 16.03.83

(54) Verfahren zur Herstellung von Perlglanzpigmenten mit verbesserten Glanzeigenschaften.

(30) Priorität: 30.03.82 DE 3211602

(43) Veröffentlichungstag der Anmeldung:
05.10.83 Patentblatt 83/40

(45) Bekanntmachung des Hinweises auf die Patenterteilung:
02.10.85 Patentblatt 85/40

(84) Benannte Vertragsstaaten:
BE CH DE FR GB IT LI NL

(56) Entgegenhaltungen:
DE - B - 2 009 566
FR - A - 1 496 353

(73) Patentinhaber: Merck Patent Gesellschaft mit beschränkter Haftung, Frankfurter Strasse 250,
D-6100 Darmstadt (DE)

(72) Erfinder: Bernhard, Horst, Dr., Haus Nr. 52,
A-4164 Schwarzenberg (AT)
Erfinder: Esselborn, Reiner, Dr., Küchlerstrasse 6,
D-6100 Darmstadt (DE)

## Beschreibung

Die Erfindung betrifft ein Verfahren zur Herstellung von Perlglanzpigmenten mit verbesserten Glanzeigenschaften auf der Basis von mit Metalloxiden beschichteten Glimmerschuppen, wobei Glimmer in wäßriger Suspension mit einer Titandioxidaquatschicht belegt und danach gewaschen, getrocknet und geglüht wird.

Intensität und Reinheit der Interferenzfarbe dieser Pigmente hängt entscheidend von der Ausbildung der auf die Glimmerschuppen aufgefällten Metalloxidschicht ab. Neben einer homogenen Schichtdicke wird vor allem gefordert, daß die Schicht rißfrei ausgebildet ist und eine möglichst geringe Lichtstreuung aufweist. Es ist dabei bekannt, daß sowohl Risse, die insbesondere bei dickeren Schichten beim Glühen der Pigmente auftreten können, als auch insbesondere die Größe der auf den Glimmer aufgefällten Metalloxidkristalle eine entscheidende Rolle für das Ausmaß der Streuung spielen. Ebenfalls bekannt ist, daß die Streuung in der Schicht im betrachteten Bereich um so größer ist je größer die Einzelkristalle des aufgefällten Metalloxids ausgebildet sind.

Das an den Streuzentren in der Metalloxidschicht entstehende diffuse Licht mindert zum einen die Intensität im Glanzwinkel des reflektierten Lichtanteils und damit die Farbsättigung, zum anderen bewirkt es eine Verweißlichung der Interferenzfarbe. Bei zu großen Kristallen verschwindet der Perlglanz und die Interferenzfarbe vollkommen.

Nach der EP-A1 0 082 985 war gefunden worden, daß durch gleichzeitiges Ausfällen von $SiO_2$ und $Al_2O_3$ zusammen mit dem Titandioxidaquat sehr homogene und stabile Fällungen erzielt werden, die nicht zu Rissebildung beim Glühen neigen. Diese Pigmente weisen eine erhöhte Transparenz und Farbkraft auf und sind sehr vorteilhaft für alle üblichen Zwecke einsetzbar. Durch das Mitausfällen von $SiO_2$ und $Al_2O_3$, die beide einen geringen Brechungsindex besitzen, wird jedoch der Brechungsindex der Metalloxidschicht gegenüber einer reinen $TiO_2$-Fällung deutlich herabgesetzt. Dies führt dazu, daß der Anteil des an der Oberfläche dieser Pigmentteilchen reflektierten Lichtes geringer ist als bei reinen $TiO_2$/Glimmer-Pigmenten.

Obwohl der mit diesen älteren Pigmenten erzielte samtige Glanz für viele Anwendungen sehr gut geeignet ist, besteht für andere Anwendungen ein Bedürfnis nach Pigmenten mit spitzem Glanz und lebhaftem Funkeln. Aufgabe der vorliegenden Erfindung war es daher, Pigmente zu finden, die den lebhaften Glanz von Pigmenten mit reiner $TiO_2$-Beschichtung besitzen, daneben aber durch eine homogene und rissefreie Schicht ein vermindertes Streulicht und eine höhere Farbsättigung aufweisen.

Eine Kombination dieser Eigenschaften schien nicht erreichbar, da einerseits die Erhöhung des Brechungsindex durch Verminderung des Anteils niedrigbrechender Bestandteile der Schicht die Inhomogenität und Rissebildung in der Schicht erhöht und andererseits aber die zur Vermeidung dieser Nachteile zugesetzten Bestandteile den Brechungsindex wieder herabsetzen. Es wurde nun jedoch gefunden, daß diese Aufgabe überraschenderweise durch eine zweistufige Beschichtung gelöst werden kann, wobei sich an eine entsprechend der EP-A1 0 082 985 vorgenommene Beschichtung eine Zweitbeschichtung in Gegenwart von Titansulfat anschließt.

Gegenstand der Erfindung ist daher ein Verfahren zur Herstellung von Perlglanzpigmenten mit verbesserten Glanzeigenschaften auf der Basis von mit Metalloxiden beschichteten Glimmerschuppen, wobei Glimmer in wäßriger Suspension mit einer Titandioxidaquatschicht belegt und danach gewaschen, getrocknet und geglüht wird, das dadurch gekennzeichnet ist, daß das Verfahren als Zweistufenverfahren durchgeführt wird, wobei zunächst eine Titandioxidaquatschicht zusammen mit Siliciumdioxid und Aluminiumhydroxid als einheitliche Schicht aufgefällt wird, das so gewonnene Pigment nach Waschen, Trocknen und Glühen in einer titansulfathaltigen Lösung suspendiert und danach durch langsames Erhitzen der Suspension erneut beschichtet wird.

Gegenstand der Erfindung sind auch die so gewonnenen Pigmente und ihre Verwendung.

Der Vorteil der erfindungsgemäßen Pigmente liegt darin, daß es mit dem erfindungsgemäßen Verfahren überraschenderweise gelungen ist, sowohl hohe Transparenz und Farbkraft durch homogene rißfreie Schichten als auch lebhaften Glanz durch hohen Brechungsindex in einem Pigment zu vereinigen. Dies was weder vorauszusehen noch für möglich gehalten worden. Es mußte vielmehr angenommen werden, daß bestenfalls ein Kompromiß zwischen beiden Eigenschaften möglich sein würde.

Die Herstellung der Pigmente erfolgt nach einem Zweistufenverfahren, wobei die erste Stufe mit dem Verfahren nach der EP-A1 0 082 985 identisch ist. Dazu werden Glimmerschuppen, die in der Regel einen Durchmesser von etwa $5-200\,\mu m$ und eine Dicke von etwa $0,1-5\,\mu m$ besitzen, in einer wäßrigen Lösung suspendiert, die mit einer geeigneten Säure, wie z. B. Salzsäure oder Schwefelsäure, auf einen pH-Wert von etwa $0,5-5$, insbesondere etwa $2,0-3,0$, gebracht wird. Zu dieser auf $50-100°C$, vorzugsweise etwa $70-80°C$, erhitzten Suspension wird dann eine Titansalzlösung langsam zulaufen lassen, wobei durch gleichzeitige Zugabe einer Base der pH-Wert der Suspension weitgehend konstant gehalten wird. Als Titansalz kann dabei jedes lösliche Titansalz verwendet werden. Bevorzugt werden $TiCl_4$ oder Titanylsufalt verwendet.

Nach dem Verfahren der EP-A1 0 082 985 wird die Fällung des Titandioxidaquats in Gegenwart von Aluminiumionen durchgeführt. Dabei ist es gleichgültig, ob die Aluminiumionen im Fällungsgefäß vorgelegt werden oder in der Titansalzlösung enthalten sind. Im Prinzip können alle Aluminiumsalze verwendet werden, die in den entsprechenden Titansalzlösungen löslich sind. Bevorzugt wird jeweils das Aluminiumsalz mit einem dem Titansalz entsprechenden Anion verwendet, also insbesondere Aluminiumchlorid oder Aluminiumsulfat. Der Zusatz von Aluminiumionen erfolgt in jedem Fall in der Weise, daß ein Gewichtsverhältnis von $TiCl_4 : AlCl_3 \cdot 6 H_2O$ von etwa 50 : 1 bis etwa 2 : 1, vorzugsweise etwa 30 : 1 bis etwa 5 : 1, eingehalten wird bzw. entsprechende Gewichtsverhältnisse beim Einsatz anderer Salze.

Das nach der EP-A1 0 082 985 gleichzeitig mit auszufällenden $SiO_2$ wird vorzugsweise der Base zugesetzt, die zur Aufrechterhaltung des pH-Wertes der Fällungssuspension gleichzeitig mit der sauren Titansalzlösung zudosiert wird. Als Base wird vorzugsweise eine Alkalilauge, insbesondere NaOH, verwendet, wobei das mit auszufällende Siliciumdioxid bevorzugt in Form eines löslichen Alkalisilicats, z. B. als Natriumsilicat, darin enthalten ist. Wird NaOH als Base verwendet, so wird in der Regel ein Gewichtsverhältnis von $NaOH : SiO_2$ von 5 : 1 bis 400 : 1, vorzugsweise von 20 : 1 bis 200 : 1, eingehalten.

Die beiden Lösungen werden langsam so zugegeben, daß die in der Glimmersuspension durch Hydrolyse entstehenden Hydroxide bzw. Oxidaquate sich jeweils vollständig auf der Glimmeroberfläche abscheiden, ohne daß wesentliche Mengen von frei in der Suspension beweglichen Nebenprodukten entstehen. Die dabei zur Anwendung kommenden Zulaufgeschwindigkeiten sind so gewählt, daß pro Minute und pro Quadratmeter zu belegender Oberfläche etwa $0,01 - 20 \cdot 10^{-5}$ mol an auszufällenden Salzen zugeführt wird. Je nach der gewünschten Dicke der Beschichtung werden dabei Beschichtungszeiten von mehreren Stunden bis zu mehreren Tagen benötigt.

Nach Erreichen der gewünschten Schichtdicke bzw. der gewünschten Interferenzfarbe wird die Beschichtung beendet und die Pigmente werden analog dem üblichen Verfahren abgetrennt, gewaschen, getrocknet und geglüht. Zum Glühen werden Temperaturen von etwa 500—1000°C, insbesondere von 700—1000°C, angewendet, wobei die gefällten Metallhydroxide bzw. Oxidaquate entwässert werden und in die entsprechenden Oxide übergehen. In der Metalloxidschicht liegen Titan, Silicium und Aluminium in oxidischer Form und gegebenenfalls auch als Verbindung, wie z. B. als Aluminiumsilicat, in homogener Verteilung nebeneinander vor. Dabei hat das Silicium, berechnet als $SiO_2$ und bezogen auf die Metalloxidschicht, in der Regel einen Anteil von etwa 0,1 bis etwa 20 Gewichtsprozent, vorzugsweise von etwa 1—10 Gewichtsprozent, und das Aluminium, berechnet als $Al_2O_3$ und bezogen auf die Metalloxidschicht, einen Anteil von etwa 0,1 bis etwa 20 Gewichtsprozent, vorzugsweise von etwa 0,2 bis etwa 10 Gewichtsprozent. $SiO_2$ und $Al_2O_3$ bilden zusammen in der Regel 0,2—30 Gewichtsprozent, vorzugsweise etwa 2—20 Gewichtsprozent, der Metalloxidschicht.

Das so gewonnene Rohpigment, das neben Zusätzen von $SiO_2$ und $Al_2O_3$ selbstverständlich auch weitere färbende oder nicht färbende Metalloxide, wie z. B. Chromoxid oder Eisenoxid, enthalten kann, wird dann einer zweiten Beschichtung unterworfen. Dazu wird das Pigment erneut in Wasser suspendiert und mit einer Titansalzlösung versetzt. Wesentlich dabei ist, daß das Rohpigment mit der Titansalzlösung in Berührung kommt, bevor die Hydrolyse zu Titandioxidaquat beginnt und daß danach erst durch geeignete Maßnahmen die Hydrolyse in Gang gesetzt wird.

Dies kann z. B. dadurch geschehen, daß das Rohpigment mit der Titansalzlösung versetzt wird und danach die Suspension langsam zum Sieden erhitzt wird, wobei die Hydrolyse einsetzt und Titandioxidaquat ausgefällt wird.

Bei dieser Zweitbeschichtung passiert zweierlei. Zum einen wird durch die Änderung der Schichtdicke durch zusätzlich aufgefälltes Titandioxidaquat die Interferenzfarbe des Rohpigments entsprechend der höheren Schichtdicke verändert. Zum anderen wird der Brechungsindex des Pigments wesentlich erhöht. Ohne an eine Theorie gebunden zu sein, kann vermutet werden, daß beim Suspendieren des Rohpigments in der Titansalzlösung diese in die bereits aufgefällte Schicht eindringt und bei der dann folgenden Hydrolyse nicht nur eine Fällung auf, sondern auch in der zuerst aufgefällten Schicht erfolgt und diese Schicht dabei zusätzlich verdichtet wird.

Es kann dies jedoch nicht die alleinige Erklärung für die überraschende Vorteilhaftigkeit der nach dem erfindungsgemäßen Verfahren gewonnenen Pigmente sein, denn es wurde gefunden, daß zwar für die Herstellung des Rohpigments beliebige Titansalzlösung, insbesondere das Chlorid oder das Sulfat, verwendet werden können, nicht jedoch für die Zweitfällung. Überraschenderweise erhält man dann besonders vorteilhafte Pigmente, wenn für die Zweitfällung eine Titanylsulfatlösung verwendet wird oder eine Titansalzlösung, die zumindest eine gewisse Menge Sulfationen enthält. Diese Menge sollte vorzugsweise mindestens etwa das 0,5—2fache der stöchiometrischen Menge betragen.

Die Zweitbeschichtung wird so lange fortgesetzt, bis die für das Endprodukt erwünschte Interferenzfarbe erreicht ist. Danach wird das Pigment auf übliche Weise abgetrennt, gewaschen, getrocknet und erneut bei einer Temperatur zwischen 500 und 1000°C geglüht. Die so erhaltenen Pigmente zeigen eine wesentlich erhöhte Brillanz, einen meßbar höheren Glanz und eine hervorragende Farbkraft. Die Pigmente können wie die bisher bekannten verwendet werden, also z. B. zur Pigmentierung von Kunststoffen, Farben und Lacken, insbesondere auch in Körperpflegemitteln und Kosmetika.

### Beispiel 1

A) Herstellung einer sulfathaltigen Titansalzlösung

Zu einer klaren Lösung von 36,25 g Na$_2$SO$_4$ in 125 ml Wasser werden 370 ml einer 20%igen Lösung von TiCl$_4$ in 5%iger Salzsäure getropft, danach die überschüssige Säure tropfenweise mit 22,5 ml 15%iger Natronlauge neutralisiert und die klare Lösung mit Wasser zu 1 l aufgefüllt.

B) Herstellung des Rohpigments

Eine Suspension von 60 g Kaliglimmer der Kornfraktion 10—70 µm in 2 l Wasser wird auf 75°C erhitzt und mit Salzsäure auf pH 2,6 eingestellt. Danach werden gleichzeitig eine Lösung, die 15 Gewichtsprozent TiCl$_4$, 5 Gewichtsprozent HCl und pro 20 g AlCl$_3$ · 6 H$_2$O enthält und eine Lösung, die 15 Gewichtsprozent NaOH und pro l 3,3 g SiO$_2$ (als Natriumsilicat) enthält, so zudosiert, daß der pH-Wert bei 2,6 konstant gehalten wird. Nach Erreichen einer goldenen Interferenzfarbe wird die Beschichtung abgebrochen, das Pigment abfiltriert, salzfrei gewaschen, bei 120°C getrocknet und 30 Minuten bei 800°C geglüht.

C) Zweitbeschichtung

Eine Suspension von 100 g des Pigmentes nach Beispiel 1B in 400 ml Titansalzlösung nach Beispiel 1A wird innerhalb von 30 Minuten auf 100°C erhitzt und bei dieser Temperatur so lange gehalten, bis sich die Interferenzfarbe, die langsam in Rotblau übergeht, nicht mehr ändert, was nach etwa 2 Stunden der Fall ist. Danach wird das Pigment abgetrennt, gewaschen, bei 120°C getrocknet und 30 Minuten bei 800°C geglüht. Man erhält ein Pigment mit kräftiger rotblauer Interferenzfarbe und hoher Brillanz.

### Beispiel 2

Ein entsprechend Beispiel 1B hergestelltes Pigment mit blauer Interferenzfarbe wird analog Beispiel 1C bei 100°C beschichtet. Nach der üblichen Aufarbeitung wird ein Pigment erhalten, das eine kräftige grüne Interferenzfarbe aufweist und hohe Brillanz besitzt.

In analoger Weise lassen sich Rohpigmente beliebiger Interferenzfarben mit einer Zweitbeschichtung zur Erhöhung der Farbkraft und der Brillanz versehen.

### Patentansprüche

1. Verfahren zur Herstellung von Perlglanzpigmenten mit verbesserten Glanzeigenschaften auf der Basis von mit Metalloxiden beschichteten Glimmerschuppen, wobei Glimmer in wäßriger Suspension mit einer Titandioxidaquatschicht belegt und danach gewaschen, getrocknet und geglüht wird, dadurch gekennzeichnet, daß das Verfahren als Zweistufenverfahren durchgeführt wird, wobei zunächst eine Titandioxidaquatschicht zusammen mit Siliciumdioxid und Aluminiumhydroxid als einheitliche Schicht aufgefällt wird, das so gewonnene Pigment nach Waschen, Trocknen und Glühen in einer titansulfathaltigen Lösung suspendiert und danach durch langsames Erhitzen der Suspension erneut beschichtet wird.

2. Perlglanzpigmente auf der Basis von mit Metalloxiden beschichteten Glimmerschuppen, dadurch gekennzeichnet, daß sie nach dem Verfahren nach Anspruch 1 hergestellt sind.

3. Verwendung der Perlglanzpigmente nach Anspruch 2 zur Pigmentierung von Kunststoffen, Farben, Lacken und Körperpflegemitteln.

### Claims

1. Process for the preparation of nacreous pigments which have improved gloss properties and are based on mica plates coated with metal oxides, mica being coated with a layer of hydrated titanium dioxide in aqueous suspension and then washed, dried and calcined, characterised in that the process is carried out as a two-stage process in which a layer of hydrated titanium dioxide is precipitated as a single layer together with silicon dioxide and aluminium hydroxide and the pigment thus obtained is washed, dried and calcined, suspended in a solution containing titanium sulfate, and thereafter coated again by slow heating of the suspension.

2. Nacreous pigments based on mica flakes coated with metal oxides, characterised in that they are prepared by the process according to claim 1.

3. Use of the nacreous pigments according to claim 2 for pigmenting plastics, paints, lacquers and body-care agents.

### Revendications

1. Procédé de préparation de pigments nacrés ayant de meilleures propriétés de brillant à base d'écailles de mica enduites d'oxydes métalliques, le mica en suspension aqueuse étant recouvert d'une couche de dioxyde de titane hydraté, puis lavé, séché et calciné, caractérisé en ce qu'on effectue ce procédé sous forme d'un procédé à deux étapes en précipitant tout d'abord une couche de dioxyde de titane hydraté conjointement avec du dioxyde de silicium et de l'hydroxyde d'aluminium sous forme d'une couche homogène tandis que, après lavage, séchage et calcination, le pigment ainsi obtenu est mis en suspension dans une solution contenant du sulfate de titane, pour être ensuite à nouveau enduit en chauffant lentement la suspension.

2. Pigments nacrés à base d'écailles de mica enduites d'oxydes métalliques, caractérisés en ce qu'on les prépare conformément au procédé selon la revendication 1.

3. Utilisation des pigments nacrés selon la revendication 2 pour la pigmentation des matières synthétiques, des couleurs, des vernis et des produits pour les soins corporels.